# EUROPEAN PATENT APPLICATION

(11) **EP 2 538 349 A2**
(43) Date of publication of application: **26.12.2012**
(21) Application number: 12160961.4
(22) Date of filing: 23.03.2012
(51) Int. Cl.: G06F 17/30

(54) **Server, inter-business enterprise information control method and computer program**

(30) Priority: 22.06.2011 JP 2011137990
(71) Applicant: Hitachi Ltd., Tokyo (JP)
(72) Inventor: Ogawa, Kazuo, Tokyo, 100-8220 (JP); Koga, Nobuto, Tokyo, 100-8220 (JP); Yoshida, Takahiro, Tokyo, 100-8220 (JP); Morioka, Toshiyuki, Tokyo, 100-8220 (JP)
(74) Representative: Calderbank, Thomas Roger

(57) **Abstract**

A Web server (12) includes a storage unit (201) that stores transaction relation information (218), transaction data requirement information (219, 220) that determines whether a reference authority is appended to a user for transaction data, and information (217) that identifies the user, associated with each other; and a control unit (200) that controls to receive the transaction data containing the transaction relation information, refer to the storage unit, extract user identification information for appending information indicating the transaction relation and the reference authority from the storage unit, when the storage unit stores the received transaction relation information and the received transaction data satisfies the transaction data requirement, and register the extracted information and information for identifying the transaction data in the database, from the user terminal, therefore, separate third parties can refer to every transaction data, even to the transaction data transmitted and received between the same transaction relations.

## Description

The present invention relates to an inter-business enterprise information exchange system, and in particularly to a technique for controlling a reference authority and display of inter-business enterprise information.

In late years, each of the business corporations providing a user environment for electronic transactions supplies application software platform functions, as services, on Internet, and users who use the service can realize the electronic transaction by only preparing an environment for connecting with Internet. The number of user has therefore increased rapidly due to easy installation. In contrast, the usage situation for the users has become diversified, and the necessity of sharing the information has also increased in the transaction, not only between an outsourcer, or a buyer, and a first-order client, or supplier, for directly executing the transaction with the outsourcer, but also between the first-order client and a second-order client for executing the transaction with the outsource via the first-order client.

In general, there has been an access control technique for transmitting and receiving transaction data between the first-order client and second-order client, in relation between each of plural number of outsourcers and clients, such as a N-to-M relation, that is, a multi-tenant environment in which they can execute the transaction with plural parties. In JP-A-2007-179476, an access to the transaction data can be controlled for every login ID possessed by the client, in the multi-tenant environment under which the transaction between the outsourcer and client can be executed electronically in the relation of N-to-M. In this way, the first-order client sets an authority to be able to refer only to the transaction data, used for the second-order client, received from the outsourcer, in one of the login IDs possessed by the own self. The login ID is then appended to the second-order client to therefore be able to refer to the transaction data in the second-order client. In JP-A-2010-266908, the first-order client sets the authority to be able to refer to the transaction data by a third party, for transmitting and receiving the transaction data of a transaction relation between the outsourcer and the client. In consequence, the second-order client utilizes the login ID held by the own self to be able to refer to the transaction data, used for the second-order client, received by the first-order client.

In JP-A-2007-179476, if the user executes the transaction with the plural number of outsourcers, as second-order clients, via separate first-order clients, there is a problem that the convenience of user becomes diminished since the transaction data in the respective transaction relations can be referred by only the login ID appended from the respective first-order clients.

The problem in JP-A-2007-179476 has been solved in the technique disclosed in JP-A-2010-266908, however, the second-order client referable to every transaction data cannot be selected for the transaction data received by the first-order client. Further, the technique disclosed in JP-A-2010-266908 lacks consideration in that it cannot respond to the case where price information etc., among information of the transaction data received by the first-order client from the outsourcer, changes its information content to present to the second-order client, when the second-order client refers to the transaction data of the first-order client.

A first preferred aim of the invention is to provide a technique referable to every transaction data by separate third parties, even to the transaction data transmitted and received between the same transaction relations under the multi-tenant environment.

A second preferred aim of the invention is to provide a technique capable of changing display information when referring to the transaction data of the third party.

A description will be concerned with means that may enable the first and second aims to be achieved. A server relative to the invention is connected with a plurality of user terminals via a network and with a database server for managing a database.

A server may provide: a storage unit that stores transaction relation information, transaction data requirement information that determines whether a reference authority is appended to a user for transaction data, and information that identifies the user, associated with each other; and a control unit that controls to receive the transaction data containing the transaction relation information, refer to the storage unit, extract user identification information for appending information indicating the transaction relation and the reference authority from the storage unit when the storage unit stores the received transaction relation information and the received transaction data satisfies a transaction data requirement, and register the extracted information and information for identifying the transaction data in the database, from the user terminal.

Preferably the control is such that the storage unit stores display-information control definition information for changing a display content of the transaction data, and the control unit receives a request of a transaction data referral screen from the user terminal to extract the transaction data referable by the user from the storage unit in accordance with the reference authority of the user registered in the database, to change the corresponding information of the extracted transaction data in accordance with the display-information control definition information, and to generate the transaction data referral screen in accordance with the changed information to be transmitted to the user terminal.

According to the invention, the separate third-order parties can refer to every transaction data, even to the transaction data transmitted and received between the same transaction relations under the multi-tenant environment. Further, according to the invention, the display information can be changed when referring to the transaction data of the third-order party.

The other objects, features and advantages of the invention will become apparent from the following description of the embodiments of the invention taken in conjunction with the accompanying drawings.

In the drawings:
Fig. 1 is an entire configuration diagram showing an inter-business enterprise information exchange system in an embodiment of the invention;
Fig. 2 is a diagram showing a hardware configuration example of a Web server 12;
Fig. 3 is a processing sequence diagram showing a transaction data display function 214 provided in the Web server 12;
Fig. 4 is a processing sequence diagram showing a transaction data transmission and reply function 215 provided in the Web server 12;
Fig. 5 is a diagram showing a data structure example provided in transaction relation information 218;
Fig. 6 is a relation diagram showing a transaction relation of a user business cooperation using the inter-business enterprise information exchange system;
Fig. 7 is a diagram showing a data structure example provided in display information control definition information 220;
Fig. 8 is a diagram showing a data structure example provided in reference authority automatic definition information 219;
Fig. 9 is a diagram showing a data structure example provided in transaction data reference authority definition information 15 and transaction data information 14;
Fig. 10 is a flowchart showing an automatic setting processing of a transaction data reference authority when a user terminal 16 of outsourcer accesses to the Web server 12 to transmit transaction data;
Fig. 11 is a flowchart showing a manual setting processing of a transaction data reference authority for the transaction data received by accessing the user terminal 16 of first-order client to the Web server 12;
Fig. 12 is a flowchart showing a setting processing of the transaction data reference authority when the user terminal 16 of second-order client accesses to the Web server 12 to reply the transaction data;
Fig. 13 is a flowchart showing a transaction data referral screen generation processing when the Web server 12 receives a request of a transaction data referral screen from the user terminal 16;
Fig. 14 is a diagram showing an example of the transaction data referral screen displayed on the user terminal 16 of first-order client when an access control is not executed in accordance with a setting of the transaction data reference authority;
Fig. 15 is a diagram showing an example of the transaction data referral screen displayed on the user terminal 16 of second-order client when the access control is not executed in accordance with the setting of the transaction data reference authority;
Fig. 16 is a diagram showing an example of the transaction data referral screen displayed on the user terminal 16 of first-order client when the access control is executed in accordance with the setting of the transaction data reference authority; and
Fig. 17 is a diagram showing an example of the transaction data referral screen displayed on the user terminal 16 of second-order client when the access control is executed in accordance the setting of transaction data reference authority.

Hereinafter, an embodiment will be described in detail with reference to the drawings.

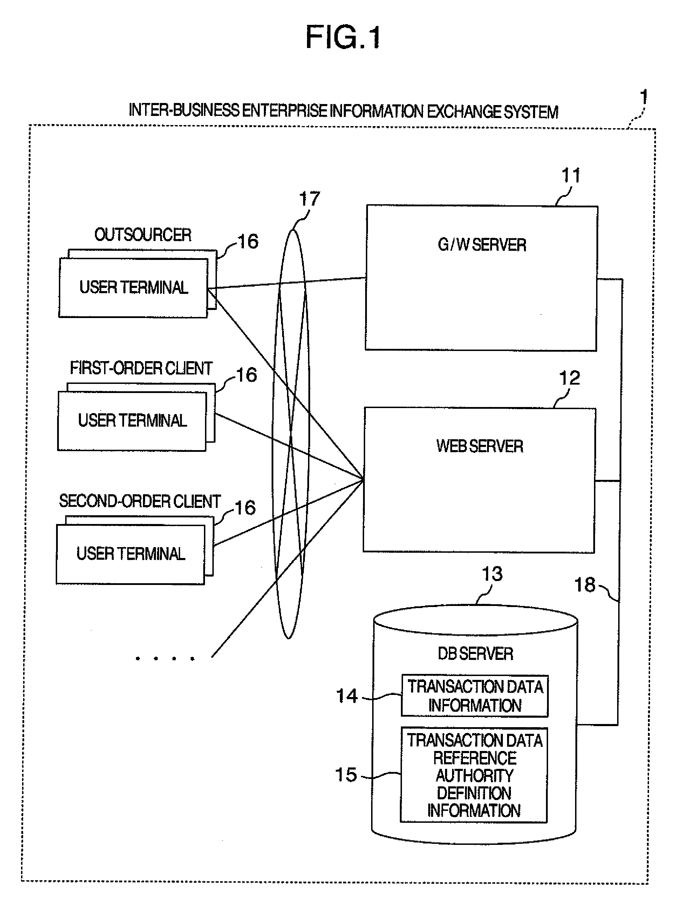

Fig. 1 is a diagram showing an entire configuration example of an inter-business enterprise information exchange system 1 relative to the embodiment. The inter-business enterprise information exchange system (computer network system) 1 is configured by user terminals 16 of plural outsourcers, first-order clients, second-order clients, etc.; a gateway server (hereinafter, referred to as a G/W server) 11; and a Web server 12. Both the G/W server 11 and Web server 12 are connected with a network 17, such as Internet etc., to transmit and receive transaction data between computers provided therein via the network 17. The G/W server 11 and Web server 12 are connected with a DB server 13 for managing a database (hereinafter, referred to as a DB) via a network 18, such as LAN (Local Area Network) etc. The DB server 13 stores transaction data information 14 and transaction data reference authority definition information 15.

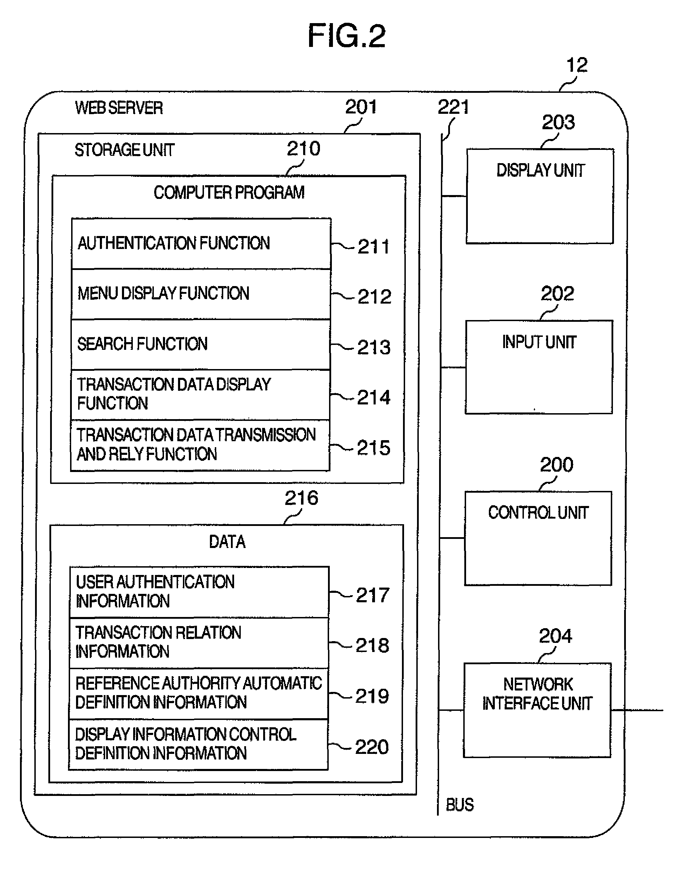

Fig. 2 is a diagram showing a hardware configuration example of the Web server 12. The Web server 12 is realized by a generally purpose computer providing a control unit 200, a storage unit 201, an input unit 202, a display unit 203 and a network interface unit 203, as built in CPU etc. Each of the units is connected with a bus 221. The storage unit 201 stores computer program 210 made up of an authentication function 211, a menu display function 212, a search function 213, a transaction data display function 214 and a transaction data transmission and reply function 215, and various data 216 made up of user authentication information 217, transaction relation information 218, reference authority automatic definition information 219, display-information control definition information 220, etc. The computer programs 210 are loaded in a memory (not shown) to be executed by the control unit 200.

In addition, though not shown, the user terminals 16, G/W server 11 and DB server 13 can also be realized by the generally purpose computer providing the control unit, storage unit, input unit, display unit, network interface, etc., built in CPU etc. The computer may be configured such that the input unit and display unit are not provided therein.

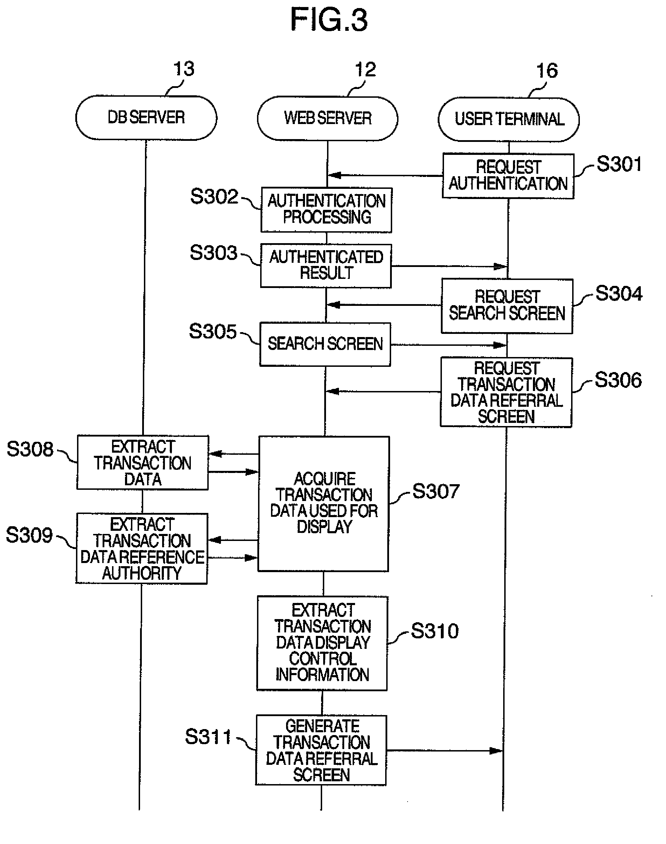

Fig. 3 is a processing sequence diagram, in which the user terminal 16 accesses to the Web server 12 via the network 17, extracts targeted transaction data information from the DB server 13 by the search function 213 in the Web server 12, controls a display of the extracted transaction data by the transaction data display function 214 in the Web server 12, and generates a referral screen of the transaction data, for receiving a transaction data reference screen.

First, the user terminal 16 transmits a user authentication request containing the user authentication information (for example, login ID and password) entered from a user, at a step S301.

The Web server 12 collates the user authentication information received from the user terminal 16 with the user authentication information 217 stored in the storage unit 201 to execute an authentication processing for the user, at a step S302. If the authentication is succeeded, a menu screen is transmitted to the user terminal 16 together with an authenticated result by the menu display function 212, at a step S303.

The user terminal 16 transmits a request of a search screen for the transaction data to the Web server 12 in response to a selection from the menu screen when the received authenticated result designates an authentication success, at a step S304.

The Web server 12 transmits the search screen for the transaction data to the user terminal 16 in accordance with the search screen request of the transaction data, at a step S305.

The user terminal 16 searches the transaction data on the search screen relative to the transaction data to transmit a transaction data reference screen request to the Web server 12, for checking the detail of transaction data, at a step S306.

The Web server 12 acquires the transaction data from the DB server 13, for displaying on the user terminal 16 in accordance with the transaction data reference screen request, at a step S307. The DB server 13 extracts the transaction data being requested as referral by the user from the transaction data information 14, at a step S308, and also extracts reference authority definition information of the transaction data being requested as referral by the user from the transaction data reference authority definition information 15, at a step S309, when acquiring the transaction data. The Web server 12 also extracts display-information control definition information being set in the reference authority definition information of the extracted transaction data from the display-information control definition information 220, at a step S310. The Web server 12 then changes display information to the transaction data extracted at the step S308 on the basis of the display-information control definition information extracted at the step S310 to generate a transaction data referral screen and be transmitted to the user terminal 16, at a step S311.

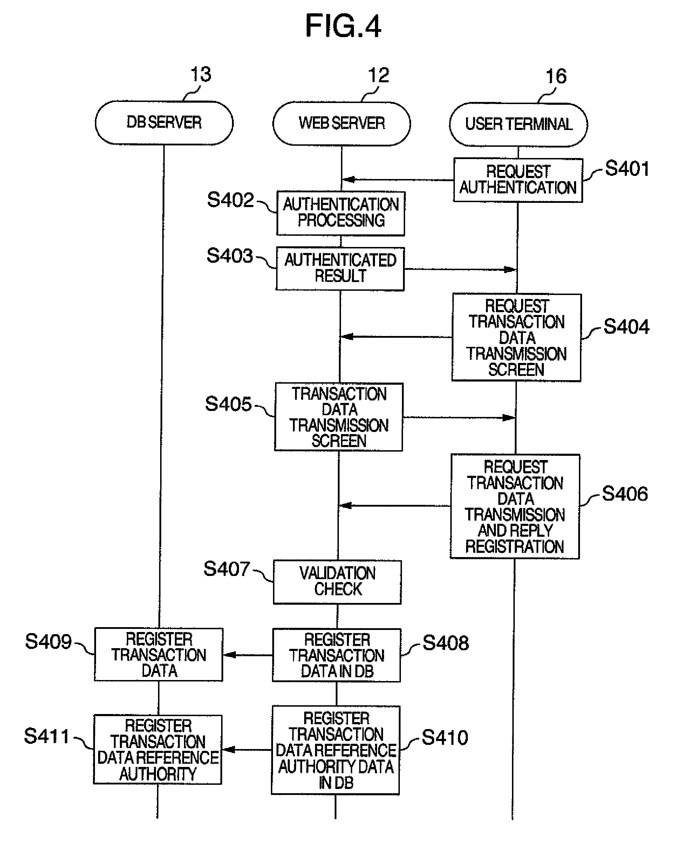

Fig. 4 is a processing sequence diagram, in which the user terminal 16 accesses to the Web server 12 via Internet, transmits and replies the transaction data by the transaction data transmission and reply function 215, and registers the transaction data and the transaction data reference authority definition information received by the Web server 12 in the DB server 13, for transmitting and replying the transaction data.

The user terminal 16 is arranged to transmit the user authentication information (for example, login ID and password) to the Web server 12, that is, to transmit the user authentication request thereto, at a step S401. The Web server 12 refers to the user authentication information 217 to execute the authentication processing for the received login ID and password, at a step S402.

The Web server 12 transmits the menu screen together with an authenticated result to the user terminal 16 by the menu display function 212, at a step S403. The user terminal 16 transmits a transmission screen request for the transaction data to the Web server 12 in response to a selection from the menu screen, at a step S404. The Web server 12 transmits a transmission screen of the transaction data to the user terminal 16 in accordance with the transmission screen request of the transaction data, at a step S405.

The user terminal 16 generates the transaction data to be transmitted from the transmission screen of transaction data to transmit a register request of the transaction data to the Web server 12, at a step S406.

The Web server 12 executes a validation check for the transaction data in accordance with the transaction data register request, at a step S407. The Web server 12 then registers the transaction data in the DB server 13, at a step S408. The DB server 13 registers the transaction data being requested as registration by the user in the transaction data information 14 when registering the transaction data, at a step S409. The Web server 12 registers the transaction data reference authority definition information in the DB server 13, at a step S410. The DB server 13 registers the reference authority information of transaction data being requested as registration by the user in the transaction data reference authority definition information 15 when registering the transaction data, at a step S411.

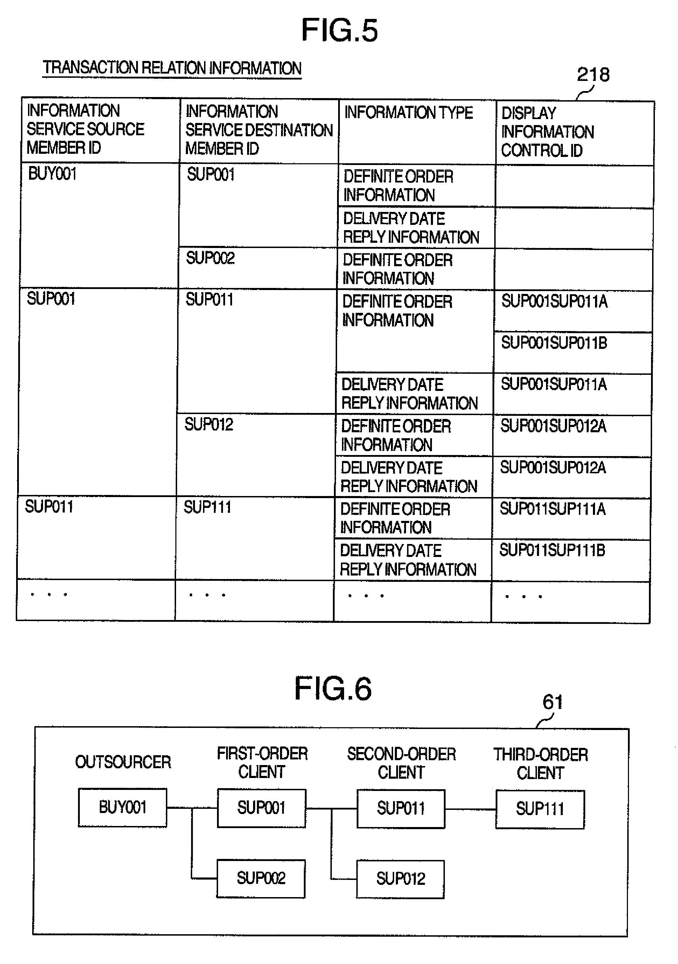

Fig. 5 is a diagram showing a data structure example of the transaction relation information 218 provided in the Web server 12. The transaction relation information 218 will be described below, that is, the user operates the user terminal 16 to transmit the transaction data to a client among the outsourcers, first-order and second-order clients utilizing the inter-business enterprise information exchange system 1, define the outsourcer and first-order client who are put in a position that supplies information, as an information service source member ID, and also define the first-order and second-order clients who are put in a position that receives the information of transaction data, as an information service destination member ID. A relation between the information service source member ID and information service destination member ID is defined as a transaction relation. In addition to that, an information type representing the class of transaction data to be transmitted and received as order information and delivery date reply information is defined, and the display-information control definition information for controlling a changed content of the display information in supplying the reference authority of transaction data is also defined. This is generated as transaction relation information 218 to be stored in a data 216 of the Web server 12 in advance. The data structure shown in Fig. 5 is represented by a transaction relation 61, as an example, in Fig. 6. The user can execute the transmission and reception of the transaction data and a setting of the transaction data reference authority on the basis of the transaction relation information 218, as shown in Fig. 4. A plurality of display information control IDs can be held for a combination of the transaction relation and information type. In the example shown in Fig. 5, the outsourcer "BUY001" can transmit and receive the transaction data "definite order information" and "delivery date reply information" with the first-order clients "SUP001" and "SUP002". The first-order client "SUP001" can supply the received transaction data to the second-order clients "SUP011" and "SUP012", as the transaction data reference authority of "definite order information" and "delivery date reply information". The user of information service source member ID can supply the transaction data reference authority only to the user of information service destination member ID. When the first-order client "SUP001" supplies the transaction data reference authority to the second-order client "SUP011" for the transaction data "definite order information", it can select two classes of the display information control IDs of "SUP011A" and "SUP011B".

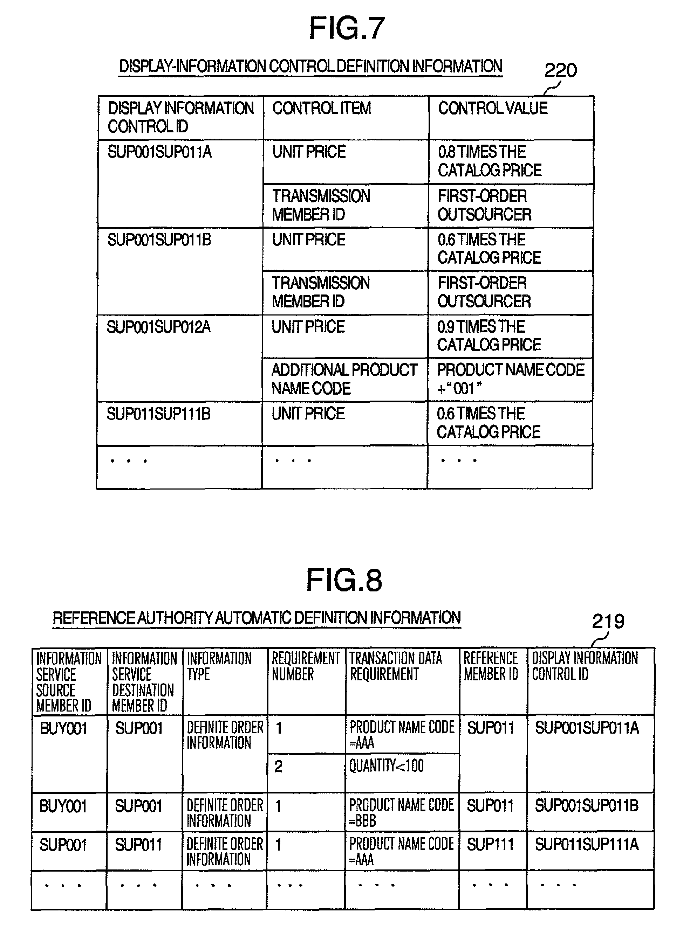

Fig. 7 is a diagram showing a data structure example of the display-information control definition information 220 provided in the Web server 12. A control item and a control value corresponding to the display information control ID are generated as the display-information control definition information 220 to store in the data 216 of Web server 12 in advance. When the user received the transaction data reference authority refers to the transaction data, the user replaces the value of control item with the control value, appends the control item and deletes the control item to be able to refer to the transaction data, on the basis of the display-information control definition information 220. When plural numbers of the control items are defined, information for the plural items can be changed for the display information control ID.

Fig. 8 is a diagram showing a data structure example of the reference authority automatic definition information 219 provided in the Web server 12. The user previously determines or generates the outsourcer who utilizes the inter-business enterprise information exchange system 1, the first-order client, the information service source member ID and information service destination member ID representing the transaction relation with the second-order client, the information type of executing a transaction, a transaction data requirement for adding the transaction data reference authority automatically, a reference member ID for supplying the reference authority and the display information control ID, as the reference authority automatic definition information 219, to then store in the data 216 of Web server 12 in advance. As shown in Fig. 4, the transaction data reference authority of the transaction data can be appended automatically, on the basis of the reference authority automatic definition information 219 when transmitting the transaction data. In the example shown in Fig. 8, when the transaction data is transmitted from the outsourcer "BUY001" as the information service source member ID to the first-order client "SUP001" as the information service destination member ID, the transaction data reference authority is appended to the second-order client "SUP011" as the reference member ID in the case where the transaction data satisfies the transaction data requirement. The transaction data requirement can be set as plural numbers of requirements, that is, requirement numbers are identical to become an OR condition and are different to become an AND condition.

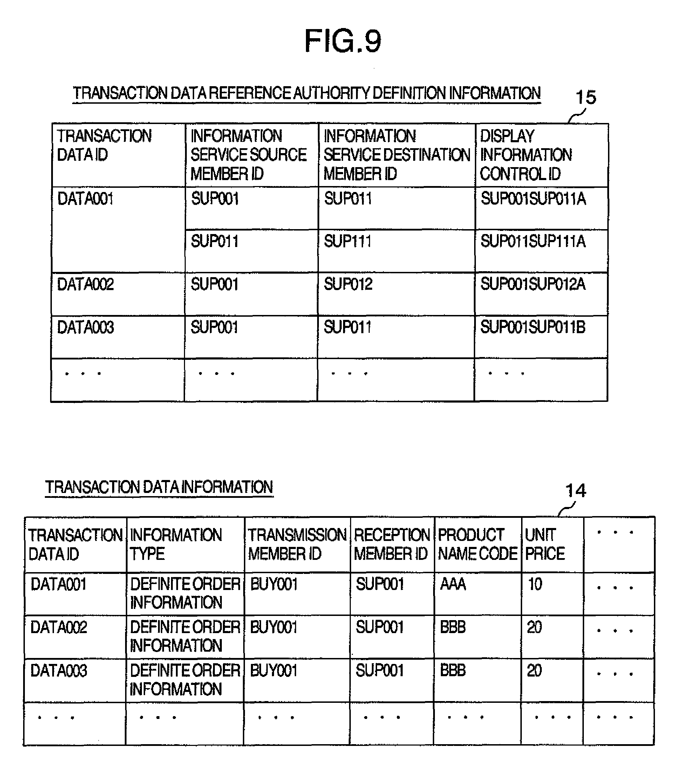

Fig. 9 is a diagram showing a data structure example of the transaction data reference authority definition information 15 and transaction data information 14 provided by the DB server 13. The DB server 13 stores the information service source member ID, information service destination member ID and display information control ID representing the transaction relation between the user for supplying the transaction data reference authority corresponding to the transaction data ID and the user received the transaction data reference authority, in the transaction data reference authority definition information 15 at every time of appending the transaction data reference authority. The DB server 13 also stores the transaction data content corresponding to the transaction data ID in the transaction data information 14 at every time of transmitting and receiving the transaction data. The transaction data ID is set as a unique ID for every one of transaction data. The user who actually transmitted the transaction data and received it are set in a transmission member ID and a reception member ID in the transaction data information 14, respectively. In addition, the transaction relation information 218 has items, as the transaction relation, referred to as the information service source member ID and information service destination member ID, and the transmission and reception for the transaction data are executed on the basis of this transaction relation. However, the transaction relation only appended with the reference authority which is not actually transmitted and received for the transaction data, such as transaction relation between the first-order and second-order clients, is also defined in the transaction relation information 218, therefore, an orientation of the items for both the transmission member ID/the reception member ID and the information service source member ID/the information service destination member ID is different, and the names are changed respectively. In the transaction data reference authority definition information 15, the transaction data reference authority can be set in plural users for one transaction data, and the display information in referring the transaction data is changed for every reference authority on the basis of the display information control ID. In the example shown in Fig. 9, the first-order client "SUP001" as information service source member ID supplies the transaction data reference authority to the second-order client "SUP011" as information service destination member ID, in the case of the transaction data ID "DATA001".

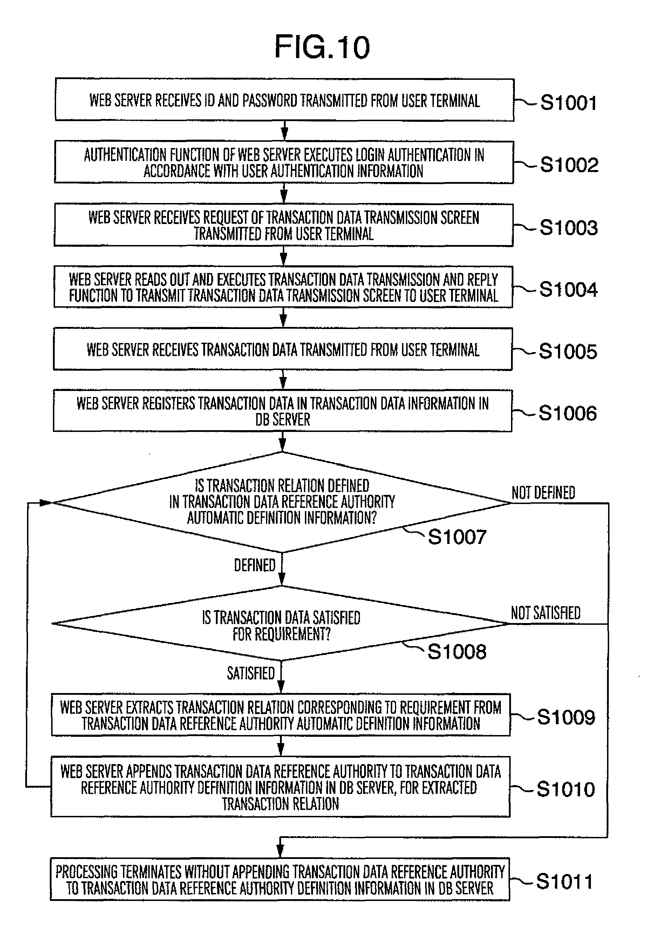

Fig. 10 is a flowchart showing a processing for setting the transaction data reference authority automatically when the transaction data is transmitted from the user terminal 16 of outsourcer, in relation to the transaction data transmission and reply function 215 provided in the Web server 12.

The Web server 12 receives the login ID and password transmitted from a Web browser in the user terminal 16 of outsourcer, at a step S1001, to check whether a combination of the login ID and password information is present in the user authentication information 217, at a step S1002. If the combination is present therein, the Web server 12 executes a login authentication processing. Next, the Web server 12 receives a request of a transaction data transmission screen transmitted from the user terminal 16 of outsourcer, at a step S1003, to read out and execute the transaction data transmission and reply function 215 to transmit the transaction data transmission screen to the user terminal 16 of outsourcer, at a step S1004. Subsequently, the Web server 12 receives the transaction data transmitted from the user terminal 16 of outsourcer, at step S1005, to append the transaction data ID to the received transaction data and be registered in the transaction data information 14 in the DB server 13, at a step S 1006. The Web server 12 then checks whether the transaction relation of the combination between a transmitter and a receiver for the registered transaction data is defined as transaction relation between the information service source member ID and information service destination member ID in the reference authority automatic definition information 219, at a step S1007. If the transaction relation is not defined, the processing terminates at a step S1011, without appending the transaction data reference authority to the transaction data reference authority definition information 15 in the DB server 13. If it is defined, the Web server 12 checks whether the registered transaction data satisfies the transaction data requirement corresponding to the transaction relation between the defined information service source member ID and information service destination member ID, at a step S1008. If the transaction data does not satisfy, the Web server 12 makes the processing terminate without appending the transaction data reference authority to the transaction data reference authority definition information 15, at the step S1011. If it satisfies, the Web server 12 extracts the transaction relation between the corresponding information service source member ID and information service destination member ID and the reference member ID from the reference authority automatic definition information 219, at a step S1009. The Web server 12 then appends the transaction data reference authority for the registered transaction data to the transaction data reference authority definition information 15, at a step S1010. At the time of appending the transaction data reference authority, the information service destination member ID of the extracted transaction relation is set in the information service source member ID, the extracted reference member ID is set in the information service destination member ID, and the extracted display information control ID is set in the display information control ID, in relation to the transaction data ID of the registered transaction data. The Web server 12 then makes the processing return to the step S1007 to check whether the transaction relation between the information service source member ID and information service destination member ID being set as the transaction data reference authority is defined separately as the transaction relation between the information service source member ID and information service destination member ID in the reference authority automatic definition information 219. Subsequently, the Web server 12 repeats the processing from the steps S1007 to S1010 until the processing terminates at the step S1011.

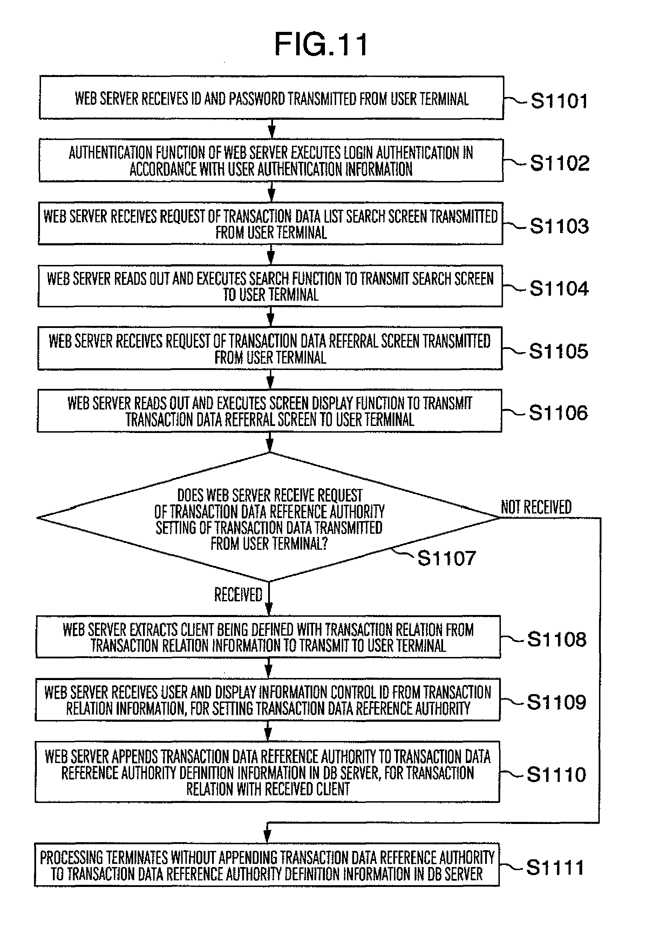

Fig. 11 is a flowchart showing a processing for setting the transaction data reference authority automatically when the user terminal 16 of the first-order client receives the transaction data, in relation to the transaction data transmission and reply function 215 provided in the Web server 12. The user of first-order client selects which of the second-order clients set the transaction data reference authority when the setting of reference authority is executed automatically from the information of transaction data.

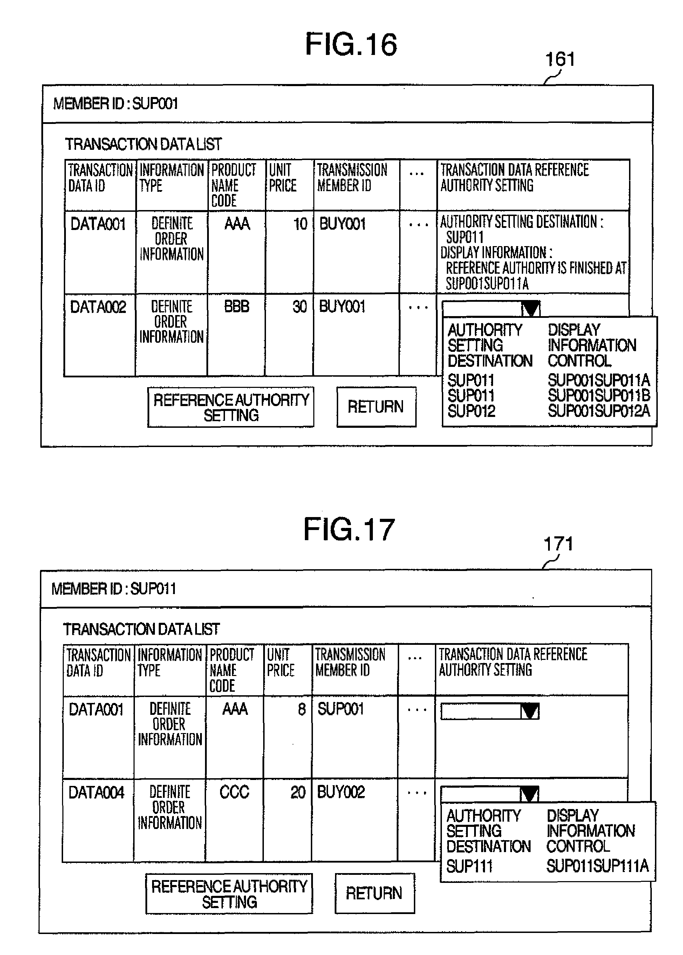

The Web server 12 receives the login ID and password transmitted from the Web browser in the user terminal 16 of first-order client, at a step S1101, to judge whether or not the combination of the login ID and password information is present in the user authentication information 217, at a step S 1102. If the combination is present therein, the Web server 12 executes the login authentication processing. The Web server 12 then receives a request of a transaction data list search screen transmitted from the user terminal 16 of first-order client, at a step S 1103 to read out and execute the search function 213 to transmit the transaction data list search screen to the user terminal 16 of first-order client, at a step S 1104. Next, the Web server 12 receives a request of a transaction data referral screen transmitted from the user terminal 16 of first-order client, at a step S 1105, to read out and execute the transaction data display function 214 to transmit the transaction data referral screen, as shown in Fig. 16, to the user terminal 16 of first-order client, at a step S 1106. A "reference authority setting" button on the transaction data referral screen is depressed to be able to execute a transaction data reference authority setting for every transaction data. The Web server 12 then checks whether a request for the transaction data reference authority setting is received from the user terminal 16 of first-order client, at a step S1107. If the request is not received, the Web server 12 makes the processing terminate, without appending the transaction data reference authority to the transaction data reference authority definition information 15, at a step S1111. If it is received, the Web server 12 extracts, from the transaction relation information 218, a list of the information service destination member ID and display information control ID for the transaction relation being set as the information service source member ID by the user who requested, to transmit to the user terminal 16 of first-order client, at a step S 1108. Next, the Web server 12 receives, from the user terminal 16 of first-order client, the information service destination member ID and display information control ID to be set as the transaction data reference authority from the extracted list, at a step S1109. The Web server 12 then appends the transaction data reference authority for the transaction data to the transaction data reference authority definition information 15, at a step S1110. At the time of appending the transaction data reference authority, the first-order client who transmitted the transaction data reference authority setting request is set in the information service source member ID for the transaction data ID of the transaction data, the information service destination member ID becoming a setting target of the transaction data reference authority is set in the information service destination member ID, and the display information control ID becoming the setting target of the transaction data reference authority is set in the display information control ID. In addition, the transaction data reference screen is moved into the transaction data list search screen when depressing a "return" button on the transaction data referral screen.

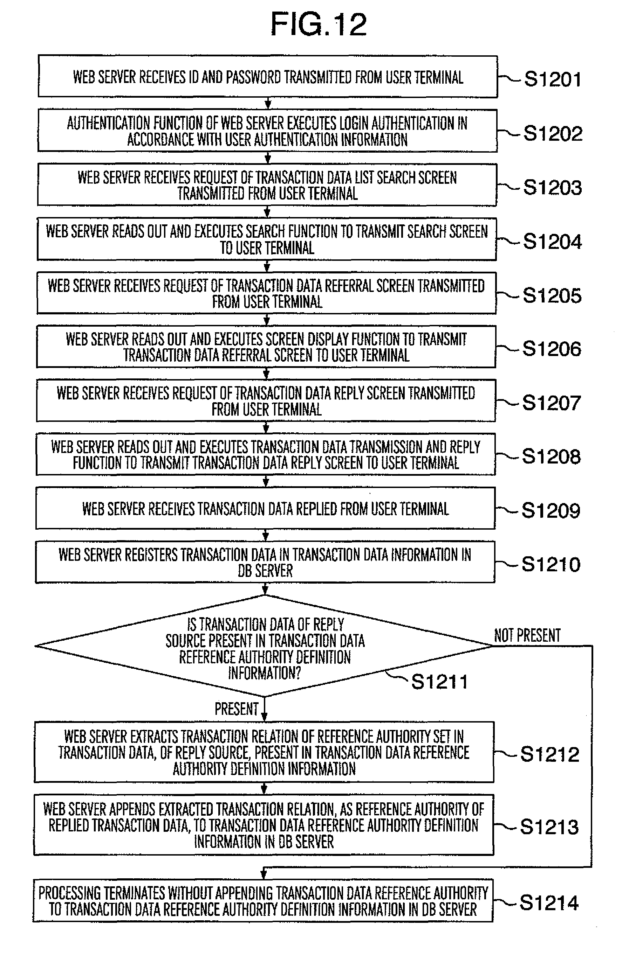

Fig. 12 is a flowchart showing a processing for setting the transaction data reference authority at the time of transmitting a reply of delivery date information etc. to the transmission member, which should sometimes be replied thereto as required, when the user terminal 16 of second-order client receives the transaction data, in relation to the transaction data transmission and reply function 215 provided in the Web server 12.

The Web server 12 receives the login ID and password transmitted from the Web browser in the user terminal 16 of second-order client, at a step S1201, to check whether the combination of the login ID and password information is present in the user authentication information 217, at a step S 1202. If the combination is present therein, the Web server 12 executes the login authentication processing. Web server 12 then receives the request for the transaction data list search screen transmitted from the user terminal 16 of second-order client, at a step S1203, to read out and execute the search function 213 to transmit the transaction data list search screen to the user terminal 16 of second-order client, at a step S 1204. Next, the Web server 12 receives the request of the transaction data referral screen transmitted from the user terminal 16 of second-order client, at a step S 1205, to read out and execute the transaction data display function 214 to transmit the transaction data referral screen, as shown in Fig. 17, to the user terminal 16 of second-order client, at a step S 1206. A transaction data link on the transaction data referral screen is depressed to be able to move into a transaction data reply screen. The Web server 12 then receives the request for the transaction data reply screen transmitted from the user terminal 16 of second-order client, at a step S 1207, to read out and execute the transaction data transmission and reply function 215 to transmit the transaction data reply screen to the user terminal 16 of second-order client, at a step S 1208. Next, the Web server 12 receives the transaction data transmitted from the user terminal 16 of second-order client, at a step S 1209, to append the transaction data ID to the received transaction data and register in the transaction data information 14 in the DB server 13, at a step S1210. The Web server 12 then checks whether the transaction data reference authority for the transaction data becoming a reply source is present in the transaction data reference authority definition information 15, with use of the transaction data ID, information service source member ID and information service destination ID as a key, at a step S 1211. If the transaction data reference authority is not present, the Web server 12 makes the processing terminate without appending the transaction data reference authority to the transaction data reference authority definition information 15, at a step S 1214. If it is present therein, the Web server 12 extracts the list of the transaction data reference authority for the transaction data becoming the reply source from the transaction data reference authority definition information 15, at a step S1212, to interchange the information service source member ID and information service destination member ID in accordance with the extracted transaction data reference authority and append the transaction data reference authority to the transaction data reference authority definition information 15 for the replied transaction data ID, at a step S1213.

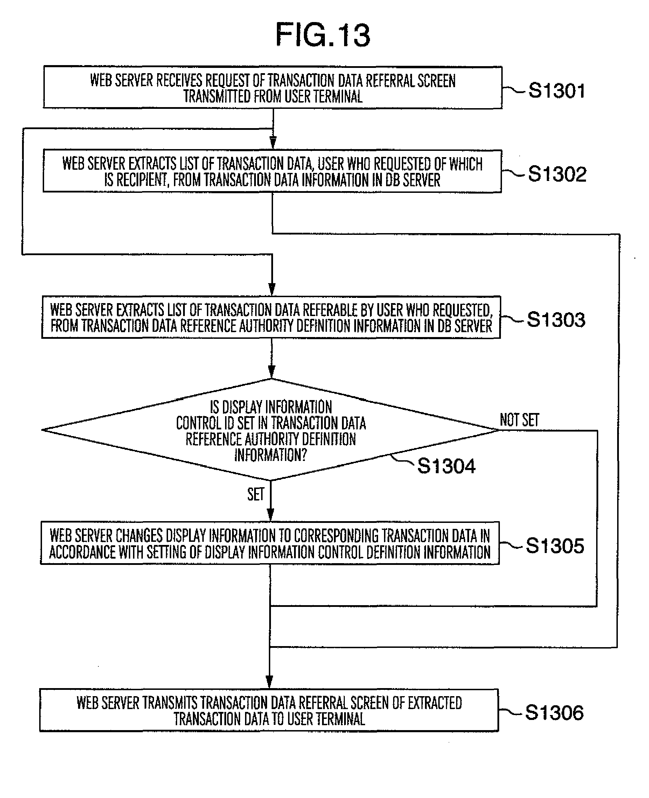

Fig. 13 is a flowchart showing a processing for acquiring and displaying the referable transaction data when the referral for transaction data is executed by the user terminal 16, in relation to the transaction data display function 214 provided in the Web server 12. This processing is equivalent to the generation processing of transaction data referral screen in the Web server 12, which corresponds to the processing present in between the steps S 1105 and S 1106 in Fig. 11 and between the steps S 1205 and S 1206 in Fig. 12.

The Web server 12 receives the request for the transaction data referral screen transmitted from the user terminal 16, at a step S 1301, to read out and execute the transaction data display function 214 to extract the list of transaction data, the user of which is the recipient who transmitted the referral screen request, from the transaction data information 14 in the DB server 13, at a step S1302, and extract the list of the transaction data, the user of which is the information service destination member ID who transmitted the reference screen request, from the transaction data reference authority definition information 15 in the DB server 13, at a step S1303. The Web server 12 checks whether the display information control ID of the transaction data reference authority definition information 15 is set in the transaction data list extracted from the transaction data reference authority definition information 15, at a step S 1304. If the display information control ID is set therein, the Web server 12 extracts the control item and control value corresponding to the display information control ID from the display information control definition information 220 to change the display information for the transaction data content of the transaction data ID corresponding to the display information control ID, at a step S 1305. If it is not set at the step S 1304, the Web server 12 does not change the display information. Next, the Web server 12 generates the transaction data referral screen on the basis of the transaction data list extracted at the step S 1302, that extracted at the step S 1303, and that changed the display information at the step S 1304 to then transmit to the user terminal 16, at a step S1306.

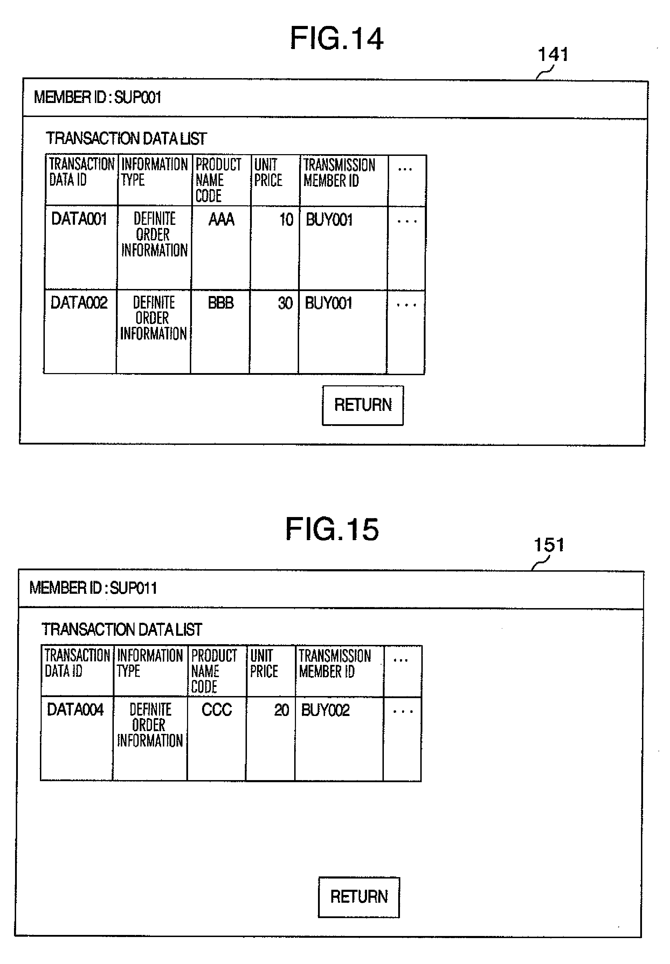

Fig. 14 is a diagram showing a transaction data referral screen 141 displayed on the user terminal 16 of first-order client when the setting of the transaction data reference authority is not executed. Fig. 15 is a diagram showing a transaction data referral screen 151 displayed on the user terminal 16 of second-order client when the setting of the transaction data reference authority is not executed. Fig. 16 is a diagram showing a transaction data referral screen 161 displayed on the user terminal 16 of first-order client when executing an access control of the transaction data in accordance with the setting of the transaction data reference authority. Fig. 17 is a diagram showing a transaction data referral screen 171 displayed on the user terminal 16 of second-order client when executing the access control to the transaction data in accordance with the setting of the transaction data reference authority. These transaction data referral screens are requested from the user terminal 16 at the step S 1305 in the flowchart relative to the transaction data referral in Fig. 13 to be transmitted to the user terminal 16, at the step S1306.

In the case of related art which does not execute the setting for transaction data reference authority, the acquiring processing, corresponding to the step S 1303 in the flowchart in Fig. 13, is not executed for the transaction data from the transaction data reference authority definition information 15 when executing the referral for transaction data. The first-order client can refer only to the transaction data received by the own self as shown in the transaction data referral screen 141, and the second-order client can refer only to the transaction data received by the own self as shown in the transaction data referral screen 151. A "return" button on the screens is depressed to be able to request the transaction data search screen of the processing at the step S 1303.

In the case of executing the access control to the transaction data in accordance with the setting of transaction data reference authority, the acquiring processing, corresponding to the step S1303 in the flowchart in Fig. 13, is executed for the transaction data from the transaction data reference authority definition information 15. The first-order client can refer to the transaction data received by the own self as shown in the transaction data referral screen 161. The second-order client can refer to the transaction data received by the own self and the transaction data being set as the transaction data reference authority shown in transaction data referral screen 171. The display information can be changed when referring to the transaction data being set as the transaction data reference authority. Further, a "reference authority setting" button on the transaction data referral screen 161 and 171 is depressed to be able to execute a manual setting processing for the transaction data reference authority. The "return" button on the screens is depressed to be able to execute the request for the transaction data search screen of the step S 1303.

The embodiment of the invention has been described above. According to the above-described embodiment, the transaction data reference authority is set in the transaction data to be able to control the reference to the transaction data for every transaction data unit, other than the user who received the transaction data. That is, the reference authority is set in the transaction data unit to be able to execute the access control with a smaller data unit, but the transaction data has been controlled only with a transaction relation unit so far. The display information can also be changed when the user being set as the transaction data reference authority refers to the transaction data. The user who sets the transaction data reference authority can select the user who is subjected to set the transaction data reference authority.

In addition, it should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. A server (12) connected with a database server (13) for managing a database (14, 15) and with a plurality of user terminals (16) via a network (17), comprising:
a storage unit (201) that stores transaction relation information (218), transaction data requirement information (219, 220) that determines whether a reference authority is appended to a user for transaction data, and information (217) that identifies the user, associated with each other; and
a control unit (200) that controls to receive the transaction data containing the transaction relation information, refer to the storage unit, extract user identification information for appending information indicating the transaction relation and the reference authority from the storage unit when the storage unit stores the received transaction relation information and the received transaction data satisfies a transaction data requirement, and register the extracted information and information for identifying the transaction data in the database, from the user terminal.

2. The server according to claim 1 wherein
the control unit (200) controls such that the identification information of an information service destination user, among the information indicating the extracted transaction relation, is defined as the identification information of an information service source user, the identification information of the extracted user is defined as an identification information of the information service destination user, both pieces of the identification information are associated with information indicating the transaction data to be registered in the database (14, 15).

3. The server according to claim 2 wherein
the control unit (200) controls to generate a reference authority setting screen of the transaction data, transmit the generated screen to the user terminal (16), receive reference authority setting information from the user terminal, and associate the reference authority setting information with information for identifying the transaction data to be registered in the database (14, 15).

4. The server according to claim 3 wherein
the storage unit (201) stores display-information control definition information (220) for changing a display content of the transaction data, and
the control unit (200) receives a request of a transaction data referral screen (141, 151, 161, 171) from the user terminal (16) to extract the transaction data referable by the user from the storage unit (201) in accordance with the reference authority of the user registered in the database (14, 15), change the corresponding information of the extracted transaction data in accordance with the display-information control definition information (220), and generate the transaction data referral screen in accordance with the changed information to be transmitted to the user terminal.

5. An inter-business enterprise information control method executed by a server (12) connected with a database server (13) for managing a database (14, 15) and with a plurality of user terminals (16) via a network (17), wherein the server comprises: a storage unit (201) that stores transaction relation information (218), transaction data requirement information (219, 220) that determines whether a reference authority is appended to a user for transaction data, and information (217) that identifies the user, associated with each other; and a control unit (200), comprising the steps of:
receiving the transaction data containing the transaction relation information;
referring to the storage unit;
extracting user identification information for appending information indicating the transaction relation and the reference authority from the storage unit, when the storage unit stores the received transaction relation information and the received transaction data satisfies a transaction data requirement; and
registering the extracted information and information for identifying the transaction data in the database (14, 15), from the user terminal.

6. The method according to claim 5 further comprising the steps of:
defining the identification information of an information service destination user, among the information indicating the extracted transaction relation, as the identification information of an information service source user;
defining the identification information of the extracted user as the identification information of an information service destination user; and
associating both pieces of the identification information with information indicating the transaction data to be registered in the database (14, 15).

7. The method according to claim 6 further comprising the steps of:
generating a reference authority setting screen of the transaction data;
transmitting the generated screen to the user terminal (16);
receiving reference authority setting information from the user terminal; and
associating the reference authority setting information with information for identifying the transaction data to be registered in the database (14, 15).

8. The method according to claim 7 further comprising the steps of:
storing display-information control definition information (220) for changing a display content of the transaction data in the storage unit (201),
receiving a request of a transaction data referral screen (141, 151, 161, 171) from the user terminal (16);
extracting the transaction data referable by the user from the storage unit (201) in accordance with the reference authority of the user registered in the database (14, 15);
changing the corresponding information of the extracted transaction data in accordance with the display-information control definition information (220); and
generating the transaction data referral screen in accordance with the changed information to be transmitted to the user terminal.

9. A computer readable medium including a computer-coded program performed by a computer, comprising the steps of:
storing display-information control definition information (220) for changing a display content of the transaction data in the storage unit (201),
receiving a request of a transaction data referral screen (141, 151, 161, 171) from the user terminal (16);
extracting the transaction data referable by the user from the storage unit (201) in accordance with the reference authority of the user registered in the database (14, 15);
changing corresponding information of the extracted transaction data in accordance with the display-information control definition information (220); and
generating the transaction data referral screen in accordance with the changed information to be transmitted to the user terminal.
